(19) Europäisches Patentamt
European Patent Office
Office européen des brevets

(11) EP 4 481 614 A1

(12) **EUROPEAN PATENT APPLICATION**

(43) Date of publication:
**25.12.2024 Bulletin 2024/52**

(21) Application number: **23382635.3**

(22) Date of filing: **21.06.2023**

(51) International Patent Classification (IPC):
**G06F 30/17** (2020.01)        **G06F 30/23** (2020.01)
**G06F 30/27** (2020.01)        G06F 113/24 (2020.01)
G06F 113/26 (2020.01)        G06F 119/14 (2020.01)
G06F 119/18 (2020.01)

(52) Cooperative Patent Classification (CPC):
**G06F 30/17; G06F 30/23; G06F 30/27;**
G06F 2113/24; G06F 2113/26; G06F 2119/14;
G06F 2119/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Airbus Operations, S.L.U.**
**28906 Getafe (Madrid) (ES)**

(72) Inventors:
• **GÓMEZ ORDOÑO, Daniel**
  **E-28906 Getafe, Madrid (ES)**
• **LLAMAS SANDÍN, Raúl Carlos**
  **E-28906 Getafe, Madrid (ES)**

(74) Representative: **ABG Intellectual Property Law,
S.L.**
**Avenida de Burgos, 16D**
**Edificio Euromor**
**28036 Madrid (ES)**

(54) **METHOD FOR DESIGNING AND MANUFACTURING A COMPOSITE STRUCTURE**

(57) The present invention is related to a method intended for manufacturing a composite structure, preferably for an aircraft. The method comprises training a set of artificial neural networks (3.1, 3.2, 3.3) to obtain a composite structure which fulfills certain specification requirements (material properties, shear loads, compression loads, buckling constraints). Said neural networks are trained with data obtained from analytical equations and from a finite element model.

The invention is also related to a computer program product and a computer-readable storage medium which perform some steps of such a method. Finally, the invention further provides an aircraft (12) which comprises composite structures (13, 14, 15) manufactured by means of said method.

**FIG.2**

**Description**

**FIELD OF THE INVENTION**

The present invention is related to a method intended for sizing, design and optimization of composite material structures using artificial intelligence techniques. More particularly, the invention is refers to a method for manufacturing an aeronautical composite structure, such as the wing, the Horizontal Tail Plane (HTP) or the Vertical Tail Plane (VTP), among others. Advantageously, the invention allows for a weight optimization of the aircraft composite structure.

**BACKGROUND**

Historically, aircraft components have been made of aluminium alloys. However, last decades, laminated composites are currently being used in several structural and non-structural applications including aeronautics, automotive, marine, and piping. The main advantages of laminated composite materials are the high specific strength and stiffness as well as the dimensional stability in comparison to the conventional metallic structures.

Nowadays, the development of composite manufacturing technologies, such structural components have been manufactured with different techniques as, for instance, co-bonding or co-curing of Carbon Fibre Reinforced Plastic (CFRP) constituent parts.

The advancement in material science has driven composite materials to globally use in aircraft design with its superiority in high structural stiffness and outstanding weight reduction.

Aeronautical field is constantly upgrading quality control mostly for improving production and safety while reducing eventual wastes and re-working costs. Therefore, manufacturing in the aerospace industry is a labour-intensive, multistep process that requires a quick, reliable, and effective fabrication.

Particularly, the manufacturing of aeronautical composite structure (in the form of laminates or stacking sequences) is a complex procedure, which involves the design of several laminate parameters (number of plies, orientations or directions, etc.). Instead of resorting to trial and error techniques, artificial intelligence (AI) techniques eases the design and manufacturing of a certain laminate fulfilling a certain specification (stiffness, geometry, etc.) and, at the same time, it prevents from wasting material during the design procedure.

For the design and manufacturing of stacking sequences (laminates), especially in the aeronautical field, two commonly used types of methods exist:

1) Optimization based on laminate parameters. The main disadvantage of these algorithms lies in the fact that they are continuous parameters, while the target stacking sequence is discrete. In this way, when resorting to these techniques, the optimization is performed in a design space different from the one containing the target variables. Consequently, this implies (in a general case) a higher computational cost in ensuring compliance with the constraints to be met by the stacking and in returning to the original space once the problem has been optimized.

2) Direct optimization of the stacking orientations. Following this approach, several optimization algorithms have been proposed, most common being genetic algorithms. However, the main drawback of the existing solutions based on the optimization of the stacking orientations is the large computational time required to compute the solution. Actually, genetic algorithms and structural analysis using finite element models (FEM) entail an increase in computational cost, which is an inconvenience at a preliminary stage of the composite design.

Accordingly, the present invention overcomes a need in the prior art for an improved method for improving known manufacturing methods intended for manufacturing composite structures, more particularly an aeronautical composite structure, where such improved method provides manufacturing advantages over methods known in the prior art. Advantageously, the invention provides a faster design (involving less computational burden), as well as it leads to a lightweight composite which fulfills certain requirements (stiffness, weight, laminate buckling) and it provides material saving during manufacturing.

The expression of the bending stiffness matrix $D_{ij}$, can be found, for instance, in Chapter III of this reference: Nettles, A. T. (1994). Basic mechanics of laminated composite plates (No. NASA-RP-1351). It is also known the dimensionless bending stiffness parameters, representative of the plate buckling, which can be calculated from $D_{ij}$.

Being $D_{ij}$ the term (i,j) of the bending stiffness matrix of the laminate, here the following dimensionless bending stiffness parameters (also referred to as Nemeth's parameters) are considered:

$$\alpha = \sqrt[4]{\frac{D_{11}}{D_{22}}}$$

$$\beta = \frac{D_{12} + 2D_{66}}{\sqrt{D_{11}D_{22}}}$$

$$\gamma = \frac{D_{16}}{\sqrt[4]{D_{11}^3 D_{22}}}$$

$$\delta = \frac{D_{26}}{\sqrt[4]{D_{22}^3 D_{11}}}$$

The parameters $\alpha$ and $\beta$ characterize laminate bending orthotropy, while the parameters $\gamma$ and $\delta$ are representative of laminate bending anisotropy.

The general expressions for the parameters $\alpha$, $\beta$, $\gamma$ and $\delta$ (also referred to as Nemeth parameters) are defined in greater detail in this reference: Michael P. Nemeth (1994). Buckling behaviour of long symmetrically laminated plates subjected to combined loadings (NASA Technical Paper 3195), May 1992.

## DESCRIPTION OF THE INVENTION

The present invention provides a solution for the aforementioned problems, by a method for manufacturing a composite structure according to claim 1, a computer program product according to claim 13, a computer-readable storage medium according to claim 14 and an aircraft according to claim 15. In dependent claims, preferred embodiments of the invention are defined.

Throughout this description, the wording composite structure or laminate are used interchangeably. The composite structures comprise fiber resin combinations in which the fiber is embedded in the resin forming plies. Advanced composite materials consist of high strength fibers embedded in an epoxy or other adhesive matrix. A non-exhaustive list of composite structures in the scope of the present invention is listed below:

- Epoxy Prepreg Carbon Fibre UD Tape;
- Carbon-fiber-reinforced polymers (CFRP);
- Glass-fibre-reinforced plastic (GFRP).

All of these composite structures can be manufactured by means of the method of this invention.

In the following description, the composite structure or laminate is considered as a combination of one or more plies that are bonded together. The composite structure manufactured by the invention can be part of a rigidized panel, and its thickness and stiffness is adapted to the particular loads it suffers during its normal use. The composite structure or laminate comprises a certain stacking or a lay-up, which is a certain arrangement of plies in a laminate, in a certain order and each ply having a certain orientation/direction.

Particularly, the method of the present invention solves the problem of optimizing a composite stacking sequence to minimize weight. The output of the claimed method is a database (or catalogue) of optimal laminates for combinations of requested compression and shear loads, which comply with the specification constraints.

In the scope of the present invention, the database of optimal laminates would be understood as a matrix wherein different configurations for the intended laminate are stored, sorted in ascending order depending on their increasing thickness. In this way, the database comprises the order in which the plies of each optimal laminate are arranged.

In a first inventive aspect, the invention provides *a method for manufacturing a composite structure comprising a stacking sequence of plies; the method comprising the following steps carried out in a computer:*

- *providing a specification of the composite structure; the specification comprising a plurality of input parameters, these input parameters being:*

    *material properties of each ply and*

*ranges of compression and shear loads;*

*wherein material properties comprise geometric properties, shear modulus, Young modulus in a longitudinal direction, Young modulus in a transverse direction and Poisson coefficient;*

- *providing a training dataset; which in turn comprises: providing analytical solutions by applying analytical buckling equations and providing linear buckling solutions obtained by using a finite element model; wherein the analytical solutions and the linear buckling solutions are obtained for a plurality of training composite structures, the training composite structures comprising combinations of stacking sequence parameters according to the same parameters included in the specification; wherein the training dataset comprises dimensionless bending stiffness parameters such as Nemeth's parameters $\alpha$, $\beta$, $\gamma$ and $\delta$; an aspect ratio $b/a$ of each ply; and applied compression, $N_x$ and shear, $N_{xy}$, loads; wherein $N_x$ and $N_{xy}$ are calculated by both the analytical buckling equations, $N_{x,analytical}$ and $N_{xy,analytical}$, and by means of the finite element model $N_{x,crit}$ and $N_{xy,crit}$;*

- *training a set of artificial neural networks, ANNs, by using the training dataset;*

- *executing a greedy algorithm that is fed with the specification and the trained artificial neural networks, wherein said greedy algorithm outputs a plurality of optimal laminates;*

- *generating a database of optimal laminates wherein the optimal laminates outputted in the previous step are stored;*

*and wherein the method further comprises the following step:*

- *manufacturing the composite structure according to at least one of the stacking sequence parameters of the optimal laminates of the database;*

*wherein the set of artificial neural networks comprises:*

- *a first artificial neural network configured to predict pure compression buckling for each combination of compression and shear loads according to the specification;*
- *a second artificial neural network configured to predict pure shear buckling for each combination of compression and shear loads according to the specification;*
- *a third artificial neural network configured to predict combined buckling for each combination of compression and shear loads according to the specification;*

*wherein the first artificial neural network is inputted with the dimensionless bending stiffness parameters $\alpha$, $\beta$, $\gamma$ and $\delta$ and the aspect ratio $b/a$; and the first artificial neural network outputs a prediction of $N_{x_{crit}}/N_{x,analytical}$;*

*wherein the second artificial neural network is inputted with the dimensionless bending stiffness parameters $\alpha$, $\beta$, $\gamma$ and $\delta$ and the aspect ratio $b/a$; and the second artificial neural network outputs a prediction of $N_{xy_{crit}}/N_{xy,analytical}$;*

*wherein the third artificial neural network is inputted with the dimensionless bending stiffness parameters $\alpha$, $\beta$, $\gamma$ and $\delta$, the aspect ratio $b/a$ and the output of the other two artificial neural networks; and the third artificial neural network outputs an estimation of a reserve factor;*

*wherein executing the greedy algorithm comprises, for each combination of compression and shear loads according to the specification, the following steps:*

*a) providing an initial stacking sequence;*
*b) providing lay-up constraints;*
*c) checking valid combinations of the stacking sequence parameters of the initial stacking sequence which meet the lay-up constraints;*
*d) evaluating a ratio $\Delta RF/\Delta L$ for the initial stacking sequence; where $\Delta RF$ is the difference between a reserve factor of the initial stacking sequence and a reserve factor of an updated stacking sequence; and wherein $\Delta L$ is the difference between the number of plies of the initial stacking sequence and the number of plies of the updated stacking sequence;*
*e) adding, at least, a new ply to the initial stacking sequence to obtain the updated stacking sequence;*
*f) computing a reserve factor of the updated stacking sequence and checking whether said reserve factor is larger*

than a RF threshold value, $RF_{threshold}$ or not;

g) if the reserve factor is larger than $RF_{threshold}$, the updated stacking sequence is an optimal laminate and is stored in the database; otherwise, the initial stacking sequence is replaced with the updated stacking sequence;

h) repeating the previous steps a)-g) while the reserve factor of an updated stacking sequence is lower than $RF_{threshold}$.

The Artificial Neural Networks (ANNs) are comprised of multiple neuron layers, mimicking the behavior of biological neurons. ANNs comprises a multilayer made of an input layer, one or more hidden layers, and an output layer. In general, each neuron (or node) connects to another and has an associated weight and threshold. If the output of any individual node is above the specified threshold value, that node is activated, sending data to the next layer of the network. Otherwise, no data is passed along to the next layer of the network.

The training set comprises solutions wherein $N_x$ and $N_{xy}$ are calculated by both the analytical buckling equations, $N_{x,analytical}$ and $N_{xy,analytical}$, and by means of the finite element model $N_{x,crit}$ and $N_{xy,crit}$. Then, a ratio related to an estimation $N_{x,crit}$ and $N_{xy,crit}$ at the output of the first and the second artificial neural networks. From the output of the first and the second ANN, one can compare the estimated $N_{x,crit}$ and $N_{xy,crit}$ with the "real" values of those parameters (as they are known in the training set). In this way, the ANN learn to predict Nx and Nxy, as they are trained with those values.

In an alternative embodiment of the method of the invention, in the step of evaluating a ratio $\Delta RF/\Delta L$ for the initial stacking sequence; the denominator $\Delta L$ is replaced by $\Delta W$, wherein $\Delta W$ is the difference between the weight of the initial stacking sequence and the weight of the updated stacking sequence. For the case of uniform thickness of the plate of a ply, the weight is proportional to the number of plies of the composite structure. For this reason, it is possible to assess the ratio $\Delta RF/\Delta L$ or $\Delta RF/\Delta W$ and to maximize it in the greedy algorithm of the present invention.

In a preferred embodiment of the method, *manufacturing comprises automated fiber placement and/or automated tape laying.*

Advantageously, manufacturing according to the claimed method comprises techniques for manufacturing layer upon layer a composite aeronautical structure like automated fiber placement (AFP) and automated tape laying (ATL).

The ATL process replicates the manual lay-up of unidirectional (UD) tape (75 - 300 mm wide) but can be done at higher speeds, on larger parts, with greater control, and over slightly curved surfaces. The AFP process consists of a gantry/robotic system with an attached fiber placement head. The AFP head enables multiple strips of composite material, or tows, to be laid onto a tool surface. Adhesion between the incoming tows and substrate is ensured by using appropriate process conditions such as heating, compaction, and tensioning systems. A series of tows forms a course, courses are then combined to create a ply, and multiple plies create a laminate.

Other manufacturing techniques suitable for manufacturing according to the claimed method are found, for instance, in A. Brasington et al. Automated fiber placement: A review of history, current technologies, and future paths forward. Composites Part C: Open Access, 2021, vol. 6, p. 100182. These techniques may take advantage of the stacking sequence parameters optimized by the method of the present invention.

In a preferred embodiment of the method, *checking valid combinations in turn comprises to check one or more of the following conditions:*

- *the stacking sequence is symmetric and balanced;*
- *the number of consecutive plies oriented at a same direction in the stacking is limited to a maximum, which is set in the range 3 to 4;*
- *at least 10 to 15 % of the plies of the stacking are oriented at a same direction;*
- *plies oriented at $\pm 45°$ are kept together in the stacking sequence;*
- *the number of plies of the stacking is limited to the range 8-30; and*

*wherein the stacking sequence parameters that does not meet one or more of the above conditions are discarded.*

The constraints listed above provides the manufactured composite structure with relevant advantages. For instance, the symmetry and balance of the composite leads to a more reliable laminate. Moreover, the constraint of keeping together plies at $\pm 45°$ aims at providing a better balance of the structure. Finally, the advantage of limiting grouping of same orientation plies together is to avoid edge splitting in the manufactured laminate.

In the scope of the present invention, "stacking sequence parameters" must be interpreted as a set of parameters that allow a full description of a stacking sequence. In this case, the stacking sequence parameters are the following: number of plies of the stacking, orientation of each ply and the order in which the plies are sorted within the stacking. Furthermore, the stacking sequence parameters may comprise indirect parameters linked to the previous ones, like the percentage of plies that are oriented at a certain direction, and the consecutive plies that are oriented at the same direction.

In a preferred embodiment of the invention, providing lay-up constraints comprises imposing that the number of consecutive plies oriented at a same direction in the stacking is limited to a maximum value, said maximum value being set in the range 3 to 4.

In a more preferred embodiment, the training dataset is provided considering a uniform flat plate structure. In this way, all the FEM and analytical data computed for the training dataset assumes that each ply of the stacking sequence is a rectangular flat plate, of uniform thickness.

In a further preferred embodiment, providing lay-up constraints comprises one or more of the following:

- The maximum amount of consecutive plies oriented at 0° in the stacking is set in the range 3 to 4.
- The maximum amount of consecutive plies oriented at 90° in the stacking is set in the range 3-4.
- The maximum amount of consecutive plies oriented at ±45° in the stacking is set in the range 3-4.

In a preferred embodiment, providing lay-up constraints comprises imposing that at least 10 to 15 % of the plies of the stacking are oriented at a same orientation.

In a more preferred embodiment, providing lay-up constraints comprises imposing one or more of the following:

- At least 10 to 15 % of the plies of the stacking are oriented at 0°
- At least 10 to 15 % of the plies of the stacking are oriented at ±45°.
- At least 10 to 15 % of the plies of the stacking are oriented at 90°.

Throughout this description, the orientation or direction of the stacking sequence of plies is defined depending on the orientation of the fibers in each ply as follows: all 0° plies are associated to the x-direction, while 90° plies are placed at 90° with regard to x-direction (in other words, they are associated to an y-direction, if a Cartesian coordinate system is applied). In this way, the coordinate system is chosen such that one of the axes (x-axis) runs in the direction of fibers of one of the plies of the laminate.

From now on, x-direction would be as the "longitudinal" axis, with the corresponding y-axis being the transverse direction. In addition, same x-axis is the one in which the stacking sequence is compressed, for that reason, the compression load is denoted as $N_x$ in the description.

The other ply orientations will then be defined with regard to this coordinate system. Starting from the x-axis and rotating to the fiber direction of the ply being defined, the angle determining the orientation of the ply can be defined. Clockwise rotations are positive angles, and counterclockwise rotations are negative angles.

This stacking nomenclature is similar to the one applied in Nettles, A. T. (1994). Basic mechanics of laminated composite plates (No. NASA-RP-1351).

In a preferred embodiment of the method, *in checking valid combinations of the stacking sequence parameters, only directions at 0°, ±45° and 90° are considered.*

Advantageously, setting limited orientations of the plies leads to reduced costs in manufacturing processes of the laminates, as well as it speeds up the computation of the method according to the present invention (because less combinations of stacking sequence parameters need to be assessed by the greedy algorithm).

In a preferred embodiment of the method, *the training dataset only comprises laminates with plies oriented at 0°, ±45° and 90°.*

Having privileged directions of the plies simplifies the manufacturing.

In a preferred embodiment of the method, *the training dataset comprises laminates with at least five different loading states, more preferably at least a pure compression load and a pure shear load.*

Preferably, the training dataset comprises data of materials and mechanical loads similar to the ones that are used in manufacturing a new laminate. The materials and geometries established in the specification can be similar to those used to train these artificial neural networks (i.e., loads, materials and geometries that do not differ more than 10 % in comparison with the parameters of the materials used for training). Otherwise, if very different materials or geometries are established in the specification, then the ANNs may not extrapolate properly and the solution may be prone to errors.

For this reason, it is important to provide the largest possible training dataset derived from FEM and analytical buckling equations, in order that the training of the ANNs is complete.

As set out above, the manufacturing method of the invention comprises a greedy iterative algorithm, which successively adds new plies to an initial stacking until the achieved stacking meets the established specification criteria.

In a particular embodiment, the method of the invention guarantees the continuity of the manufactured laminate by placing a ±45° ply as the first ply (outermost ply). For instance, if the composite structure (laminate) to be manufactured is a wing, then having continuous plies through the wingspan helps prevent delamination and placing a ±45° ply in the surface (first ply) minimizes splintering when drilling during the manufacturing of the laminate.

Another advantage of this method is that it automatically guarantees the compatibility of laminates in its own optimization process, i.e. the laminates obtained for high loads are obtained by adding plies to the optimal laminates for lower loads. This compatibility is a fundamental requirement for the manufacturing processes used in aeronautical composite structures, and this algorithm simplifies its manufacturing and compliance.

In the scope of the present patent, the compatibility would be understood as satisfying the blending constraints, as explained in reference B. Kristinsdottir et al. (2001). Optimal design of large composite panels with varying loads. Composite Structures, 51(1), pages 93-102, doi: 10.1016/s0263-8223(00)00128-8.

Another criterion taken into consideration in the method of the invention is the buckling resistance of the plate. Performing the buckling assessment by using finite element models is too time consuming. Moreover, the analytical approaches are not sufficiently accurate and take non-conservative assumptions for a generic laminate. For this reason, the present invention provides a trade-off between accuracy and speed, by incorporating a set of artificial neural networks (ANNs) that can predict combined buckling failure under compression and shear loads. In this way, the method overcomes these problems of excessive computation.

In a preferred embodiment of the method according to any of the previous embodiments, *the composite structure material set in the specification is: epoxy, carbon-fiber-reinforced polymers and/or glass-fibre-reinforced plastic.*

Advantageously, the method of the invention can be applied to manufacture a laminate made of Epoxy Prepreg Carbon Fibre UD Tape. In other embodiments, the invention can be applied to other materials such as: Carbon-fiber-reinforced polymers (CFRP), glass-fibre-reinforced plastic (GFRP), etc.

In a preferred embodiment of the method according to any of the previous embodiments, *each of the first and the second artificial neural networks comprise:*

- *an input layer with 5 to 10 neurons;*
- *three hidden layers, with 50 to 90, 20 to 40 and 10 to 30 neurons, respectively.*
- *an output layer, with 1 neuron;*

*and wherein the third artificial network comprises:*

- *an input layer with one neuron more than the input layer of the first and the second artificial neural networks,*
- *three hidden layers, with 50 to 90, 20 to 40 and 10 to 30 neurons, respectively.*
- *an output layer, with 1 neuron.*

In a preferred embodiment of the method according to any of the previous embodiments, *each of the first and the second artificial neural networks comprise:*

- *an input layer with 5 neurons;*
- *three hidden layers, with 70, 30 and 20 neurons, respectively.*
- *an output layer, with 1 neuron;*

*and wherein the third artificial network comprises:*

- *an input layer with 6 neurons.*
- *three hidden layers, with 70, 30 and 20 neurons, respectively.*
- *an output layer, with 1 neuron.*

In an event more preferred embodiment of the method according to any of the previous embodiments:

- *a sigmoid activation function is configured for at least some of the neurons of at least one of the artificial neural networks; and/or*
- *a mean squared error is configured as a loss function in at least one of the artificial neural networks.*

In preferred embodiments of the invention, the ANNs are multilayer and comprise sigmoid neurons, that is to say, they are activated by a sigmoid functions. This approach is convenient because it takes into account the nonlinearity of buckling problems.

In a preferred embodiment, *one or more of the following input parameters are established in the specification:*

- *Young's modulus in the longitudinal direction, E1, is set in the range 130 to 160 GPa.*
- *Young's modulus in the transverse direction, E2, is set in the range 7.5 to 9.5 GPa.*
- *Shear modulus, $G_{12}$, is set in the range 3.6 and 4.6 GPa.*
- *Poisson coefficient, $\mu_{12}$, is set in the range 0.3-0.4.*

Advantageously, these values of input parameters are particularly appropriate for composite structures in aircraft industry. Attention is drawn that those input parameters are not an exhaustive list, so additional input parameters can be added.

In a preferred embodiment according to any of the previous embodiments, dimensions of a ply of the laminate is established in the specification. For example, it can be inputted in the specification the size of a rectangular plate that serves a ply. In even more preferred embodiments, the thickness a ply of the laminate is uniform.

In a preferred embodiment of the method, *the RF threshold value, RF*$_{threshold}$*, is in the range 1 to 1.05.*

In a more preferred embodiment, the threshold value of RF is fixed to 1. In this case, RF<1 implies that the load applied to the laminate is higher than the critical load (which leads to the buckling of the structure), whereas RF$\geq$ 1 corresponds to the case wherein the load applied to the laminate is equal or lower to the critical load.

In alternative embodiments, the RF threshold (RF$_{threshold}$) is set to a higher value in order to establish a higher margin of safety. For instance, RF=1.05 entails a structure with an additional margin of safety of 5% compared to the critical value.

It is worth to underline that throughout this specification only failure due to buckling has been mentioned, thus the reserve factors refer to buckling. Although buckling is the most relevant failure factor, it is also possible to consider other reasons of failure by defining other RF (e.g., a strength RF, etc.). Other embodiments of the invention may comprise other reserve factors.

In a second inventive aspect, the invention comprises *a computer program product comprising instructions which, when the program is executed by a computer, cause the computer to carry out the following steps of the method according to any of previous embodiments: providing the specification, providing a training dataset, training a set of artificial neural networks, executing a greedy algorithm, and generating a database of optimal laminates.*

In a third inventive aspect, the invention comprises *a computer-readable storage medium comprising instructions which, when executed by a computer, cause the computer to carry out the following steps of the method according to any of previous embodiments: providing the specification, providing a training dataset, training a set of artificial neural networks, executing a greedy algorithm, and generating a database of optimal laminates.*

In a fourth inventive aspect, the invention comprises *an aircraft comprising a composite structure manufactured according to the method of any of the aforementioned embodiments of the first inventive aspect.*

Some examples of composite structures that can be manufactured by the method of the invention comprise a vertical tail plane (VTP), a horizontal tail plane (HTP) and a wing, among others.

Although all the examples provided in this description refer to aeronautic composite structures, the method of the invention is suitable for manufacturing any composite structure, irrespective of the intended application thereof.

Accordingly, the present invention mainly provides the following advantages with respect to the conventional solutions:

- The method as a whole, taking into account the aforementioned advantages of the design and manufacturing algorithm and ANN training, combines high accuracy and speed. The invention is particularly suitable for pre-sizing and manufacturing of composite structures. Indeed, by performing the training to predict the error of the analytical equations instead of the buckling loads directly provides with several benefits, like:

  ○ First, the size of the required ANN is reduced and thus the computational cost, since the function to be fitted is less complex. Thus, this entails a more convenient computation.
  ○ Secondly, the convergence and extrapolation capacity of the ANNs is increased since it is supported by analytical equations that contain a large part of the physics of the design problem.

- The ANNs are trained with buckling results from accurate finite element models (FEM) and is able to reach a similar level of accuracy but in several orders of magnitude less time. Since a first analytical approximation is already known, the set of ANN is fed these analytical equations, so that it only needs to learn, for each set of input parameters (specification), what is the error due to the assumptions of the analytical equations with respect to the finite element model. In other words, the artificial neural networks (ANN) of the invention are trained to predict buckling critical loads.

## DESCRIPTION OF THE DRAWINGS

These and other features and advantages of the invention will be seen more clearly from the following detailed description of a preferred embodiment provided only by way of illustrative and non-limiting example in reference to the attached drawings.

Figure 1   This figure shows an aircraft wing structure which needs compatibility amongst its laminates. The method of the present invention is particularly suitable for this kind of structures.

Figure 2   This figure shows a diagram of a preferred embodiment of the claimed method.

Figure 3     Figure 3 illustrates the analytical model for the compression-shear buckling interaction curve, which fits a parabola.

Figure 4     This figure shows a comparison between the analytical model and FEM training dataset points.

Figure 5     This figure shows an example of database of optimal laminates computed by the method of the invention.

Figure 6     This figure shows a stacking according to one of the laminates of the database of Figure 5.

Figure 7     This figure shows a side view of an aircraft comprising aeronautical composite structures produced by the method of the invention.

## DETAILED DESCRIPTION OF THE INVENTION

As will be appreciated by one skilled in the art, aspects of the present invention may be embodied as a method for manufacturing a composite structure, a computer program with instructions to carried out certain steps of said method, and an aircraft which comprises a composite structure designed by means of said method.

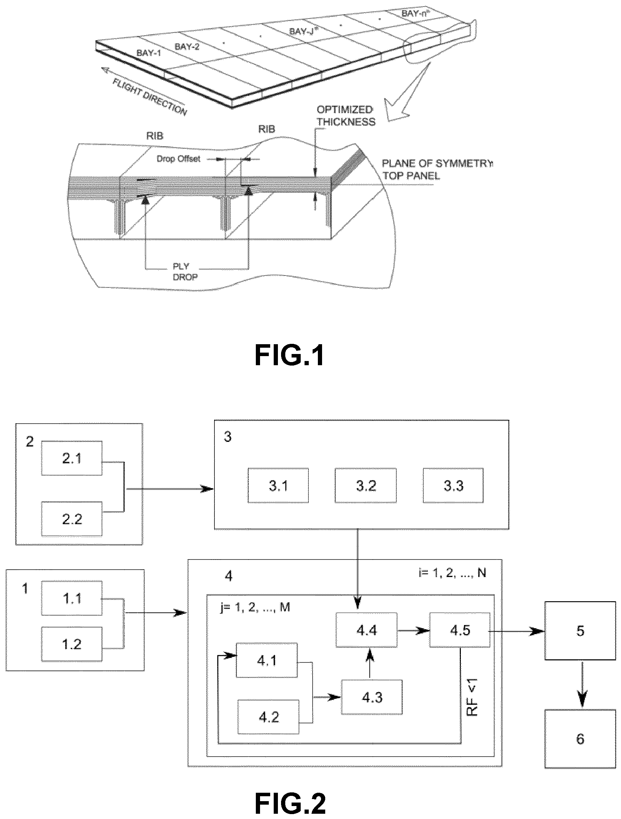

Figure 1 shows an example of an aeronautical composite structure (a wing of an aircraft) which needs compatibility amongst laminates. As illustrated, different thicknesses are required for each panel depending on its position (e.g., in the ribs, etc.). Plies from the thinner laminates have continuity throughout the wing. Continuous ply across the surface of the composite structure helps prevent delamination.

A preferred embodiment of the method of the invention is summarized, as a flowchart, in Figure 2.

STEP 1: Providing (1) the specification of the laminate to be designed

In this sense, the specification comprises input parameters for the method, particularly:

- Providing (1.1) material properties, geometry and the dimensions of the plates (preferably, rectangular or flat plates are considered).
- Providing (1.2) ranges for the load ranges (both compression and shear) for which the optimal laminate database is to be obtained.

In the scope of this description, specification of the laminate/composite structure to be designed would be understood as the information of previous steps (1.1) and (1.2) that are inputted to the method of the invention, in other words, the specification at least comprises: material properties (size of a ply of the laminate, shear modulus, Young modulus in the longitudinal direction and in the transverse direction, Poisson coefficient) along with compression and shear loads.

Particularly, if the composite structure to be manufactured is a wing, then a wing panel can be modelled as a plurality of thin flat plates simply supported in every side. Obviously, the imperfections and assumptions of this simple model lead to certain error (i.e., stringer effects are neglected). However, the ANNs accounts for this and refine the results, thus allowing a more realistic optimization of the composite structure to be manufactured.

The output of the method will be a laminate database or catalogue, which will be understood as a list of several composite designs which comply with the specification, particularly, a list of optimal laminates for combinations of requested compression and shear loads, as later explained in STEP 5 of the method.

STEP 2: Providing (2) a training dataset; which comprises providing (2.2) buckling data generated by a finite element model (FEM) and providing (2.1) buckling data obtained through analytical buckling equations

In this step, the following sub-steps takes place:

- Providing (2.1) analytical data by applying analytical buckling equations to a training dataset.
- Providing (2.2) multiple linear buckling solutions of the training dataset using a finite element model (FEM). Any solver which is able to calculate the linear buckling of a plane plate is suitable for the FEM.

In this case, the computing of sub-steps (2.1) and (2.2) takes place assuming a flat plate structure.

Solutions of sub-steps (2.1) and (2.2) are to be obtained for the training (data)set of structures, comprising various combinations of materials, plate dimensions, stacking sequences and compression vs. shear load ratio, according to the same parameters included in the specification of STEP 1. These solutions are the outputs of STEP 2 and are used then as input parameters for the set of artificial neural networks (ANNs) of STEP 3. The set of ANN comprises three ANN, as described later.

Outputs of STEP 2 are the following parameters:

a) Dimensionless bending stiffness parameters, representative of the plate buckling. In this case, Nemeth parameters $\alpha$, $\beta$, $\gamma$ and $\delta$ are considered to be outputted in STEP 2. Recall that the parameters $\alpha$ and $\beta$ characterize laminate bending orthotropy, while the parameters $\gamma$ and $\delta$ are representative of laminate bending anisotropy.

b) Aspect ratio of the plate, representative of the dimensions of each ply. With $b$ being the smaller dimension of the plate, and $a$ representing the major dimension of the plate, then the aspect ratio is defined as the ratio $b/a$. In this example, the plates are considered as rectangular.

As detailed later, other parameters are calculated from a) and b) parameters above, in particular:

- Compressive buckling ratio ($BR_c$) and/or shear buckling ratio ($BR_s$). Furthermore, in the following, the ratio of compressive versus shear buckling ratios is considered, which is defined as the pure compression buckling ratio ($BR_c$), divided by the pure shear buckling ratio ($BR_s$); that is to say, $BR_c/BR_s$. This last parameter allows for the characterization of combined loading (including compression and shear effects) of the laminate.
- Reserve factor (RF), which represents how far from the critical state is a laminate under test. To obtain this parameter, the critical loads need to be calculated. To understand this R, an interaction curve relating both buckling ratios $BR_c$ and $BR_s$ is defined. This interaction curve is the fitting of an analytical interaction to a parabola that meets the following condition:

$$BR_c + BR_s^2 \leq 1$$

The parabolic equation is explained in this reference: S. B. Batdorf and Manuel Stein (1947). Critical combinations of shear and direct stress for simply supported rectangular flat plates (National Advisory Committee for Aeronautics, Technical Note 1223), March 1st.

A first ratio of RF error is defined as follows, which is representative of the error committed by the analytical parabolic curve compared to the solution provided by set of ANN, particularly the third ANN (3.3):

$$1st\ ratio\ RF\ error = \frac{(BR_s^2 + BR_c^2)_{crit}}{(BR_s^2 + BR_c^2)_{parabola}}$$

Also, a second ratio of RF error can be defined as follows, which is representative of the error committed by the analytical parabolic curve compared to the solution provided by FEM:

$$2nd\ ratio\ RF\ error = \frac{(BR_s^2 + BR_c^2)_{FEM}}{(BR_s^2 + BR_c^2)_{parabola}}$$

Ideally, if the ANNs have been properly trained, $(BR_s^2 + BR_c^2)_{crit}$ (evaluating that expression in the critical value) outputted by the third ANN would be close to $(BR_s^2 + BR_c^2)_{FEM}$.

Finally, a reserve factor (RF) can be defined as follows:

$$RF = \frac{(BR_s^2 + BR_c^2)_{crit}}{(BR_s^2 + BR_c^2)_{specification\ loads}}$$

RF is the value which serves for deciding whether a laminate candidate is considered an optimal one (thus, it is stored in the database) or not. The reference to "specification loads" refers to BRs and BRc values calculated taking into account the range of input loads in the specification. The numerator of the previous equation is computed in conditions of buckling-induced failure, according to prediction of the ANN.

As aforementioned, the set of ANN comprises three different ANN. Two of said ANN only require the dimensionless bending stiffness parameters (i.e., Nemeth's parameters) and the aspect ratio of the plate to be trained. Moreover, for the training of the third ANN, which predicts combined buckling, an additional input parameter is required: ratio of compressive versus shear buckling ratios. In other words, the outputs of STEP 2 are applied as input parameters to the ANN of STEP 3 (described below). RF value is the output of the third ANN (3.3).

The output parameters of STEP 2 are calculated with FEM analysis, in sub-step (2.2), based on the previous equations for the dimensionless bending stiffness parameters, the aspect ratio, compressive buckling ratio and shear buckling ratio, and the so-called real RF.

The analytical equations used in sub-step (2.1) for the buckling prediction and which are corrected by the trained set of ANNs (3.1, 3.2, 3.3) mentioned above are described in the following.

First of all, the pure compressive buckling equation which is afterwards refined by a first ANN is given below,

$$N_{x,min} = \frac{-\pi^2}{b^2}\left(2\sqrt{D_{11}D_{22}} + 2(D_{12} + 2D_{66})\right),$$

wherein $N_x$ denotes the parameter representative of the pure compression buckling load approximation, and $b$ is the dimension of the side of the laminate onto which the compression is applied. This Equation of $N_{x,min}$ entails certain assumptions, in particular:

- Small thickness: Plain stress state of the laminate.
- The plate is simply supported at every side.
- The plate works as a specially orthotropic laminate in the bending mode, that is to say, $D_{16} = D_{26} = 0$ in the bending stiffness matrix, as well as $A_{16}=A_{26}= 0$ (being $A_{ij}$ the extensorial stiffness matrix, while $A_{16}$ and $A_{26}$ are terms which relate shear strains to normal stresses, and normal strains to shear stresses, respectively). More details of $A_{ij}$ can be found in Equation 53 of reference: Nettles, A. T. (1994). Basic mechanics of laminated composite plates (No. NASA-RP-1351). This $N_{x,min}$ is only valid if every ply is oriented at 0° or 90°. However, this hypothesis is not convenient in industry. For this reason, the results of the analytical expressions are afterwards refined by the set of artificial neural networks.
- The aspect ratio is chosen to minimize buckling load.

Analogously, the pure shear buckling load approximation parameter $N_{xy}^*$ is given by the following equation:

$$N_{xy}^* = \frac{-\pi^2}{b^2}(D_{11}D_{22}^3)^{1/4}$$

The analytical values of $N_{xy}^*$ are then refined by the second ANN, see more details in Equation 6 of Nemeth reference provided before.

With regard to combined-load buckling parameters, the pure compression buckling ($BR_c$) and pure shear buckling ($BR_s$) ratios are defined as follows:

$$BR_c = \frac{N_x}{N_{x,crit}}, BR_s = \frac{N_{xy}}{N_{xy,crit}},$$

being $N_x$ the applied compression load, $N_{xy}$ the applied shear load, $N_{x,crit}$ the pure compression buckling critical load and $N_{xy,crit}$ the pure shear buckling critical load.

In the present invention, the critical loads are computed by FEM and then compared to the ones estimated by the set of ANNs. In this way, the ANNs are trained.

To summarize, the output of STEP 2, which is used later to feed and train the ANNs, comprises: dimensionless bending stiffness parameters; aspect ratio; and the loads Nx and Nxy, both calculated by analytical equations and by FEM.

Advantageously, this parameter choice (which combines dimensionless bending stiffness parameters, the aspect ratio and the ratio of compressive versus shear buckling ratios obtained from FEM analysis, as well as $N_{x,min}$, $N_{xy}^*$, $BR_c$ and $BR_s$ calculated through the analytical buckling equations) allows that the ANNs, after training, are able to predict the error of the analytical equations instead of the buckling loads (FEM analysis), which leads to relevant advantages. For instance, the size of the required ANN is reduced and thus the computational cost, since the function to be fitted is less complex. Without prejudice of the foregoing, this approach also eases the convergence and extrapolation capacity of the ANNs.

The training dataset comprises a variety of laminates (with different geometries, orientations, loads, etc.) are used and subjected to FEM analysis. The data obtained by FEM, together with those obtained from analytical buckling equations, are then used to train the set of ANNs.

STEP 3: Training (3) a set of artificial neural networks (ANNs)

At least three different ANNs are trained with the data outputted from STEP 2:

- A first artificial neural network (3.1), also referred to as pure compression ANN, configured to predict pure compression buckling results.
- A second artificial neural network (3.2), also referred to as pure shear ANN, configured to predict pure shear buckling.
- A third artificial neural network (3.3), also referred to as combined buckling ANN, which is further inputted with the ratio $BR_c/BR_s$, which in turn results from the output of the other two ANNs (3.1, 3.2). The third ANN (3.3) is configured to predict combined buckling.

In this regard, the training of the first (3.1) and the second ANNs (3.2) is performed by feeding them with the following input parameters: parameters calculated via FEM analysis (dimensionless bending stiffness parameters, aspect ratio, and the ratio of compressive versus shear buckling ratios $BR_c/BR_s$) and parameters calculated via analytical buckling equations (RF, $N_{x,min}$, $N_{xy}^*$, $BR_c$ and $BR_s$). In other words, all the parameters from STEP 2.

Actually, the output of the first ANN (3.1) provides an estimation of $N_{x_{crit}}/N_{x,analytical}$, wherein the analytical compression load ($N_{x,analytical}$) can be obtained from the specification of input parameters (STEP 1). Then, the output of the first ANN (3.1) is multiplied by $N_{x,analytical}$ to obtain $N_{x_{crit}}$, which is the critical value of the compression load, in other words, the critical value for buckling. In this way, BRc can be computed as the ratio between the applied load, Nx, and the critical value $N_{x_{crit}}$. In other words, the output of the first ANN (3.1) corresponds to the ratio between the analytical value of Nx and the value of Nx that the first ANN (3.1) predicts that it would be obtained by FEM.

Likewise, the output of the second ANN (3.2) provides an estimation of $N_{xy_{crit}}/N_{xy,analytical}$, wherein the analytical shear load ($N_{xy,analytical}$) can be obtained from the specification of input parameters. Then, the output of the second ANN (3.2) is multiplied by $N_{xy,analytical}$ to obtain $N_{xy_{crit}}$, which is the critical value of the shear load, in other words, another critical value for buckling. In this way, BRs can be computed as the ratio between the applied load, Nxy, and the critical value $N_{xy_{crit}}$. Similar to the first ANN (3.1), the output of the second ANN (3.2) corresponds to the ratio between the analytical value of Nxy and the value of Nxy that the second ANN (3.2) predicts that it would be obtained by FEM.

More in detail, for each combination of the data outputted in STEP 2, the first ANN (3.1) provides the ratio of the analytical pure compression load estimation with respect to the finite element model (FEM) estimation. Likewise, the second (3.2), for each combination of the data outputted in STEP 2, provides the ratio of the analytical pure shear load estimation with respect to the finite element model (FEM) estimation.

As in the previous networks, in the third ANN (3.3) is required the factor $(BR_s^2 + BR_c^2)_{FEM}$, which comes out of the third ANN (3.3) network divided by the analytical one (that of the parabola, $(BR_s^2 + BR_c^2)_{parabola}$). To obtain the RF, this quotient is multiplied by the denominator, which is taken directly from the equation of the parabola. Once $(BR_s^2 + BR_c^2)_{FEM}$, is obtained, it is divided by the factor $(BR_s^2 + BR_c^2)_{specification\ loads}$, according to the applied loads inputted in the specification to compute RF.

In short, the RF of interest is, for each point (x,y), the distance to the origin of that point divided by the distance to the origin of the point on the estimated "parabola" (the one in FEM) that is at that same BRc/BRs ratio.

For the training of the third ANN (3.3), the parabolic interaction curve relating both buckling ratios $BR_c$ and $BR_s$ is considered.

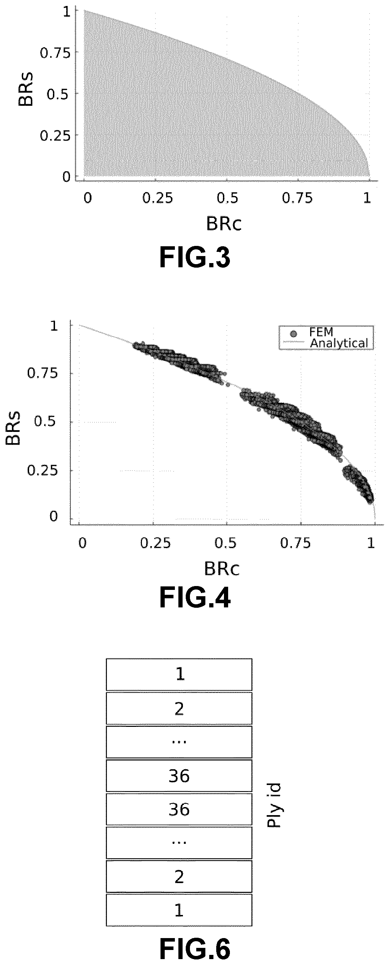

Figure 3 illustrates the analytical model for the compression-shear buckling interaction curve, which fits a parabola and which is applied to train the ANNs. The valid interaction zone is the gray region, which corresponds to valid solutions for the laminate. Considering, as in Figure 3, a plot wherein BRc values are represented in x-axis and BRs values are included in y-axis (according to a Cartesian coordinate reference system), then the denominator of RF formula would be, for each point (x,y), the distance to the origin. The numerator, on the other hand, would be the distance to the origin of the real curve predicted by FEM, which approximates a parabola but has the variations shown in Figure 4. For instance, the point (0.5, 0.5) of Figure 3 lies in the gray region under the parabolic curve, which means that the laminate is in a safe region and it does not undergo buckling. Conversely, when the point goes beyond the gray region, buckling failure happens.

Figure 4 provides an example of a comparison between the analytical model and FEM training points. Results from FEM are not completely reproduced by the analytical model. Indeed, FEM results for BRs-BRc curve do not totally fit to a parabolic curve. These inaccuracies are reduced by the third ANN. Neural network training reduces the relative error to under 0.5 % for most laminates.

The operation of each of the ANN is summarized below:

- The first ANN (3.1) is configured to predict the error made by the analytical equation for pure compression buckling.

- The second ANN (3.2) is configured to predict the error made by the analytical equation for pure shear load, in a manner analogous to the functioning of the first ANN (3.1).

- The third ANN (3.3) is configured to predict the interaction curve for combined compression-shear buckling. This interaction curve, as mentioned above, is approximated analytically by a parabola. Thus, the third ANN (3.3) is configured to learn, for each combination of input data obtained from STEP 2, how far the finite element model results depart from this parabola.

Once the three ANNs (3.1, 3.2, 3.3) are trained with the training dataset, they are configured for their use in buckling prediction with new input parameters, like the ones in the specification of STEP 1. That is to say, after training of the ANNs (3.1, 3.2, 3.3), only the aforementioned parameters (Nemeth's parameters, the aspect ratio, $N_x$, $N_{xy}^*$ ) need to be computed. By introducing said parameters into the pure compression artificial neural network (3.1) and the pure shear artificial neural network (3.2), respectively, the buckling ratios ($BR_c$, $BR_s$) are obtained.

Afterwards, the ratio $BR_c/BR_s$ is calculated and inputted, along with the other input parameters from STEP 2, into the third ANN (3.3) to obtain the final buckling prediction result for each given input parameter combination (loads, etc.). The output of the third ANN (3.3) corresponds to an estimated reserve factor (RF), which relates the state of loading in which the laminate or composite is compared to the critical one. In other words, the reserve factor is a measure of margin to failure, such that the effective load multiplied with the reserve factor gives the failure load for the composite. This estimated reserve factor (RF) can be compared to the real RF obtained from FEM analysis, in order to have an estimation of the error of the ANN.

STEP 4: Executing (4) a greedy optimization algorithm

The greedy optimization algorithm is fed with the specification input parameters of STEP 1. Attention is drawn that the optimization algorithm is built as a two-level (nested) loop iterative one, with an outer iteration (*i*-index) and an inner iteration (*j*-index).

The outer iteration (*i*= 1, 2, ..., N) is limited by N, being N the number of combinations of input parameters of the specification. For instance, if a range of 3 different shear loads and 3 different compression loads are tested (according to the specification of STEP 1), then M=9, as all possible parameter combinations are assessed. In this case, a single material is assumed (thus, only a particular value for elastic properties is considered).

The inner iteration (*j*= 1, 2, ..., M) is not limited by a predetermined *M* value, as it only stops when an optimal laminate is found for a certain combination of parameters. For this reason, the designed optimization algorithm is considered as a "greedy" one, characterized by searching for locally optimal solutions at each inner iteration. Once a solution laminate is retrieved, said optimal laminate is stored in a database of optimal laminates, which will be discussed later.

The optimization process starts by providing (4.1) an initial stacking sequence or initial lay-up with the minimum number of plies. This initial lay-up is an input parameter that can be based on *a priori* knowledge of the skilled person in the art. For example, a minimum of 8 plies can be set. In that case, two possible initial lay-up can be considered:

- The stacking (45°, -45°, 0°, 90°, 90°, 0°, -45°, +45°); or
- The staking (45°, -45°, 90°, 0°, 0°, 90°, -45°, +45°);

as those two are the thinnest stacking sequences that satisfy the symmetry and other lay-up constraints.

Also, the optimization process comprises providing (4.2) lay-up constraints (e.g., a minimum percentage of plies in each direction ...).

Then, the process comprises checking (4.3) whether the stacking sequence parameters are valid or not, in compliance with lay-up constraints. If the stacking sequence parameters are not valid (e.g., it comprises more consecutive plies than the maximum number allowed according to the lay-up constraints), then they are discarded and the algorithm moves forward to the next inner iteration.

Also, checking valid combinations of the stacking sequence parameters comprise checking (4.3) that the stacking sequence meet one or more of the following constraints:

- Setting that the obtained laminates are symmetric and balanced in order to avoid coupling stresses.
- Setting limited orientations in the plies (for instance, only allowing plies oriented at 0°, 90° and +-45°).
- Imposing that plies at $\pm 45°$ are kept together in the stacking.
- Imposing that the maximum number of consecutive plies at a same orientation is restricted to the range 3-4.

Later, evaluating (4.4) the ratio $\Delta RF/\Delta W$ for each set of valid stacking sequence parameters of sub-step (4.3). Among the valid combinations from sub-step (4.3), the combination of the initial orientation that maximizes the ratio $\Delta RF/\Delta W$ is selected. $\Delta RF$ is the improvement of RF with the laminate under test compared to the RF of the initial lay-up (measured as a difference between the RF of the latter iteration stacking and the RF of the previous iteration stacking), while $\Delta W$ corresponds to the weight increment of the laminate (also measured as a difference of weight between consecutive inner iterations). In this preferred embodiment, all the plies of the laminate are uniform in thickness. For this reason, $\Delta W$ can be replaced with the variation in the number of plies in two consecutive inner iterations.

It is worth pointing out that when evaluating (4.4), the ratio $\Delta RF/\Delta W$ is mazimized. However, the maximum value of the ratio $\Delta RF/\Delta W$ does not necessarily meet the input parameters according to the specification in STEP 1, which are given by RF. For this reason, RF is also required, as explained in next method step (4.5).

Finally, adding (4.5), at least, a new ply to the previous iteration. The previous iteration would be understood as the $j$-1 iteration. In other words, if the algorithm is in the first inner iteration ($j$=1), then the "previous iteration stacking" is the initial lay-up set up in sub-step (4.1).

For the new stacking obtained in sub-step (4.5), RF is computed and, if RF is below a RF threshold value, then the inner iteration is repeated until RF value of the laminate outputted in step (4.5) is greater than a certain RF threshold value ($RF_{threshold}$). Otherwise, if $RF \geq RF_{threshold}$, the laminate is considered as an optimal one and it is stored in the database of optimal laminates, see more details in STEP 5.

In case of $RF < RF_{threshold}$ in the inner iteration, generating another stacking with a different orientation in the upper layer and updating the initial lay-up (4.1) to the stacking outputted by step (4.5).

In each inner iteration, at least a new ply is added to the previous iteration stacking until RF is greater than a certain RF threshold value ($RF_{threshold}$). The at least one new ply can be placed in introduced in any position of the previous iteration stacking.

All combinations that, by adding at least one ply to the initial lay-up, meet the constraints imposed on the stacking sequence are found. In first place, valid combinations of stacking sequence parameters are found by adding a single new ply to the initial lay-up. However, if there are no valid combinations of stacking sequence parameters satisfying the lay-up constraints, then additional new plies are added, until at least a valid combination is found. For instance, more than 1 new ply is added in each inner iteration when in step (4.2) is provided a lay-up constraint imposing that the plies oriented at $\pm 45°$ must be added together in the stacking. Also, more than 1 new ply can be added in each inner iteration to satisfy minimum percentage of plies oriented at a certain direction.

For each of these valid combinations of the stacking sequence parameters, the ANN is used to predict the buckling reserve factor for the given loads. The combination that results in the largest increase in the reserve factor per unit weight (that is, the maximum $\Delta RF/\Delta W$) with respect to the initial stacking is the one that the greedy algorithm chooses as the locally optimal solution. Likewise, this procedure guarantees the compatibility of the laminate obtained.

Given a range of loads (compression and shear loads), the optimization algorithm of STEP 4 aims at finding an optimal stacking sequence for the laminate. In case this solution already meets the structural requirements (i.e. its reserve factor is greater than a certain value of threshold value, the threshold is fixed to 1 in this case), this stack is considered to be the optimal one for the given loads. If not, iteration of the greedy algorithm continues following the same process, successively adding new plies to the stacking, until the structural condition (RF > $RF_{threshold}$) is met.

STEP 5. Generating (5) of the database of optimal laminates

Each output of the greedy algorithm is a solution (optimal laminate) that satisfies the structural requirements included in the specification, as well as the lay-up constraints. By repeating said greedy algorithm for each load combination and storing the results in an ascending order (from the thinnest to the thickest laminate), an optimal laminate database is obtained, wherein each load state is associated to the laminate that meets the structural requirements with the lowest possible weight.

It is worth pointing that, if the same method is performed by successively increasing the load (i.e., by inputting a range of increasingly higher loads in the specification), the solutions for higher loads consider, as their initial stacking, the solutions obtained for the loads immediately lower according to the input specification range, resulting all the obtained stacks compatible. The compatibility of the laminates is crucial for the present invention.

In the scope of the present invention, STEPS 1-5 of the method is executed in any computer means or other electrical device equipped with a processor and memory for storing the data, such as in a laptop, in a cloud-based environment or the like.

STEP 6. Manufacturing (6) the composite structure based on one of the designs included in the database of STEP 5.

Step 6 is carried out by common manufacturing methods available for the skilled person. Also, the different plies are bonded by using adhesives (such as acrylics, epoxies, cyanoacrylates, as well as adhesive tapes and films) according to the order determined in the database.

Example of specification according to STEP 1

To test the method of the invention, a wing of an aircraft is manufactured, which requires a specification (input parameters) and the application of the claimed method. First of all, the following geometric parameters serve to describe the plates or plies of the intended wing to be obtained:

- Geometry: Rectangular plate of sides $a$= 1000 mm and $b$= 200 mm, to define the aspect ratio b/a.

In addition, several material properties are also inputted:

- Thickness: 0. 25 mm (for each ply of the laminate to be manufactured)
- $E_1$ = 145000 MPa and $E_2$ = 7600 MPa (in-plane elastic moduli). Particularly, $E_1$ refers to Young's modulus in the longitudinal direction (fiber direction), whereas $E_2$ is the Young's modules in the transverse direction.
- $G_{12}$ =3600 MPa (in-plane shear modulus).
- $\mu_{12}$= 0.3 (Poisson coefficient).

For instance, said parameters can be inputted as a text file to the method of the invention. The specification includes geometry and material properties, load ranges and constraints. The obtained laminates will satisfy all these requirements.

In view of the above, the designed stacking will be made of rectangular plates of a uniform thickness, but all of them will be made of the same material (as they all are manufactured by the same material with identical elastic properties).

The specification further comprises load ranges, for instance:

- Compression load ($N_x$, also referred to as longitudinal load): $N_x$ initial load = -10 N/mm, $N_x$ load step = -50 N/mm, $N_x$ maximum load= -1000 N/m. In this range, compression values are tested from the initial load value to the maximum load value in increments given by the load step.
- Shear load ($N_{xy}$), also inputted as an interval: $N_{xy}$ initial load = 0 N/mm, $N_{xy}$ load step= 50 N/mm, $N_{xy}$ maximum load= 1000 N/mm.

In this way, intervals for both compression and shear loads are defined. For instance, these intervals can be predetermined based on a-priori knowledge about the laminate to be manufactured or taking into account conservative considerations (e.g., the highest loads that the laminate would undergo during its normal operation). All the possible combinations of $N_x$ and $N_{xy}$ values are tested and an optimal laminate is obtained for each of them. In this case, it is computed a laminate with $N_x$= -10 N/mm and $N_{xy}$=0 N/mm, then another one with $N_x$= -10 N/mm and $N_{xy}$= 50 N/mm, and so on, until all the combinations are assessed.

Example of training dataset obtained by FEM and analytical equations according to STEP 2

The training dataset used for training are 60000 linear buckling solutions obtained with MSC Nastran (SOL 105). These 60000 Nastran analyses have been done with random combinations of parameters within certain ranges, particularly:

- Rectangular panel dimensions, varying the aspect ratio ($b/a$) between 1/5 and 1.

- Stacking of the laminate: Imposing that all are symmetrical and balanced. Moreover, only plies oriented at 0°, 90°, 45° or -45° are allowed. Analyses have been made with laminates from a minimum of 8 plies to a maximum of 30 plies.

- Compression-shear load combination.

All the above data has been computed for five different loading states:

- Pure (100%) compression
- Pure (100%) shear
- Combined load, comprising compression at a rate of 80% and shear at a rate of 20%.
- Combined load, comprising shear at a rate of 20% and compression by 80%
- Combined load, comprising the pure compression and the pure shear simultaneously.

The training dataset further comprises the same data obtained from FEM analysis but considering the buckling analytical equations.

Example of STEP 3: design and operation of the ANN set

In this preferred embodiment, each of the three ANN (3.1, 3.2, 3.3) comprises a multilayer, which in turn involves an input layer (with 5 neurons), an output layer (with a single neuron) and three hidden layers, with 70, 30 and 20 neurons, respectively. In this embodiment, the three ANN trained according to the invention are shaped identically, in order words, they have the same number layers and same number of neurons in each layer, excepting the third ANN (3.3) having an additional neuron in its input layer (6 neurons) in comparison with the other two ANN (3.1, 3.2).
The first and the second ANN have five inputs (corresponding to the aspect ratio and the four Nemeth's parameters), while the third ANN (3.3) has an additional input: the ratio of the outputs of the two first ANNs (3.1, 3.2).
On the other hand, each of the ANNs (3.1, 3.2, 3.3) has a single neuron in the output layer, which is representative of the reserve factor estimated by each ANN.
It is also possible to compare the estimated RF and the real RF that each ANN receives as an input parameter, depending on the loss function defined for the neurons of the ANN. In this way, the accuracy of the ANN can be assessed. The loss function measures the error between the real RF values (the ones obtained from FEM) and the estimated RF values (calculated by the ANN).
A sigmoid activation function is chosen, along with a mean squared error as the loss function. This network applies ADAM optimiser (an extended version of stochastic gradient descent). In other embodiments, different activation functions are chosen, such as linear, binary, or non-linear (rectified linear unit, leaky rectified linear unit, exponential linear units, etc.).
In alternative embodiments, the three ANN of the invention are shaped differently, and exhibit a distinct multilayer architecture.
In other embodiments of the invention, the architecture of the ANN set can be envisaged differently. For instance, other alternatives are also possible, such as perceptron or multilayer perceptron, feed forward neural networks (FFNN), convolutional neural networks (CNN), recurrent neural networks (RNN), radial basis functional neural networks (RBFNN), and self-organizing neural network (SONN), among others.

Details about STEP 4 in preferred embodiments

In a preferred embodiment, providing (4.2) lay-up constraints comprises imposing the following constraints to the stacking sequence parameters:

- Preferred orientations are limited to certain discrete privileged values. In this case, only orientations at 0°, ±45 ° and 90° are admitted for the solution.
- The maximum number of consecutive plies that can be oriented at a same angle is 4. Particularly, it has been limited to 4 the amount of consecutive plies oriented at 0°, ±45 ° and/or at 90° in the stacking.

Additionally or alternatively, further lay-up constraints can be provided (4.2), such as imposing a minimum percentage of plies at a certain orientation. In a preferred embodiment of the invention, a constraint of having at least 10% of the plies oriented at 0° and/or at 90° is required. In an even more preferred embodiment, at least 30 % of the plies of the stacking are oriented at ±45 °.

<u>Example of database of optimal laminates according to STEP 5 created by the method of the invention</u>

The output of the greedy algorithm (4) of the invention is stored in the database of optimal laminates, which summarizes the optimal laminates computed for the ranges of compression and shear loads inputted in the specification. Notice that the resulting laminates are made of plies arranged in different orientations (in this case, 0°, ±45°, 90°). In the database, ply drop-offs locations are determined and there is ply continuity through the laminates.

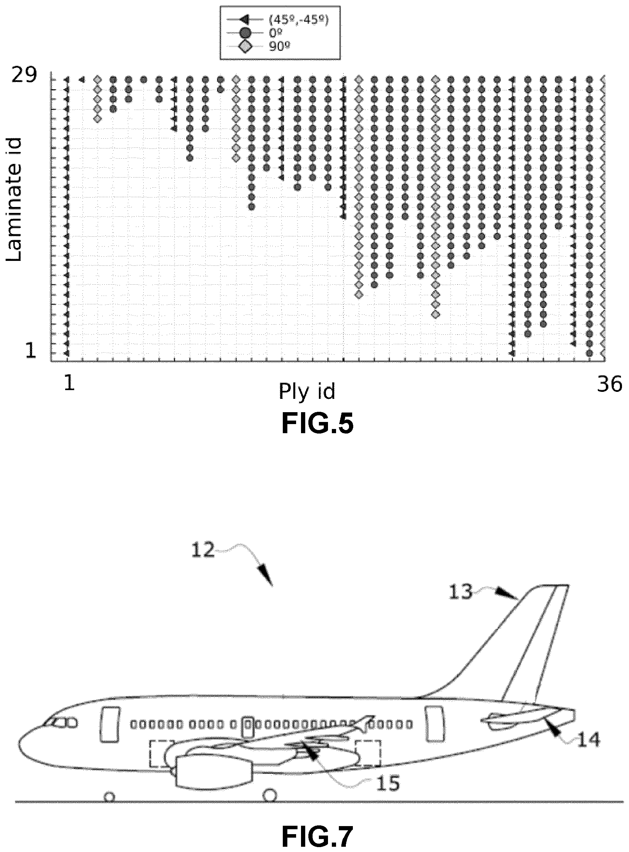

An example of the appearance of this database of optimal laminates is shown in Figure 5, wherein the vertical axis is the laminate identifier (sorted in ascending order, from the thinnest to the thickest stacking), while the horizontal axis represents the ply (or layer of the stacking) identifier (id). For instance, the column of the database with ply identifier 1 corresponds to the outermost ply, while the column of the database with ply identifier 36 is the innermost one.

Likewise, the row of the database with laminate identifier 1 relates to the initial laminate lay-up (associated with the minimal load of the input parameter range) while laminate identifier 29 refers to the thickest laminate (corresponding to the maximum load of the input parameter range). In this way, the laminate grows along the database, in ascending order of laminate identifier. For instance, the stacking corresponding to the row of the database shown in Figure 5 (with laminate identifier equal to 29) is illustrated in Figure 6, as seen from the primary loading direction edge. From top to bottom, this stacking comprises 72 plies, being 36 plies shown in Figure 5 while the other 36 plies are arranged in mirror symmetry with regard to the first 36 plies.

Attention is drawn to the fact that the composite structures manufactured by the method of the invention are, preferably, symmetric. For this reason, only half of the plies are shown in the database. Moreover, the storage of only half of the plies saves computational cost.

It is worth to underline that the first ply (see ply id= 1 in Figure 5, which is oriented at + 45°) is continuous, as said first ply is part of all the optimal laminates of the database and it is always placed at the surface of all them.

Furthermore, it is worth to compare the two thinnest laminates, in order words, laminate id 1 and 2. Notice that they only differ in ply identifier=34, where an additional new ply oriented at ±45°. This new ply, according to step (4.5) of the greedy algorithm, can be placed at any position of the stacking, but maintaining all the previous plies.

Just a side note, the "holes" or empty positions in Figure 5 does not mean that those positions of the laminate are empty. For instance, laminate id=1 comprises a stacking according to the three orientations shown in the database (±45°, ±45°, 0°) and the mirrored version of it (0°, ±45°, ±45°), that is to say, laminate id=1 is associated with the stacking (±45°, ±45°, 0°, 0°, ±45°, ±45°). The holes are only a representation as a matrix, in order that the thickest laminate fits in the database.

<u>Embodiment of STEP 6: aircraft comprising composite structures manufactured by using the claimed method</u>

Figure 7 shows a side view of an aircraft (12) comprising a vertical tail plane, VTP (13), a horizontal tail plane, HTP (14) and a wing (15), being all of these structures aeronautical composite structures manufactured according an embodiment of the method of the invention.

Attention is drawn to the fact that if the number of plies of the composite structures (13, 14, 15) is minimized by means of the claimed method, thus the most lightweight composites which fulfils the specification requirements are achieved.

## Claims

1. Method for manufacturing a composite structure (13, 14, 15) comprising a stacking sequence of plies; the method comprising the following steps carried out in a computer:

   - providing (1) a specification of the composite structure (13, 14, 15); the specification comprising a plurality of input parameters, these input parameters being:

      material properties (1.1) of each ply and
      ranges of compression and shear loads (1.2);

   wherein material properties (1.1) comprise geometric properties, shear modulus, Young modulus in a longitudinal direction, Young modulus in a transverse direction and Poisson coefficient;
   - providing (2) a training dataset; which in turn comprises: providing (2.1) analytical solutions by applying analytical buckling equations and providing (2.2) linear buckling solutions obtained by using a finite element model; wherein the analytical solutions and the linear buckling solutions are obtained for a plurality of training composite structures, the training composite structures comprising combinations of stacking sequence parameters according to the same parameters included in the specification; wherein the training dataset comprises dimensionless bending stiffness parameters such as Nemeth's parameters $\alpha$, $\beta$, $\gamma$ and $\delta$; an aspect ratio $b/a$ of each ply; and applied compression, $N_x$ and shear, $N_{xy}$, loads; wherein $N_x$ and $N_{xy}$ are calculated by both the analytical buckling equations, $N_{x,analytical}$ and $N_{xy,analytical}$, and by means of the finite element model $N_{x,crit}$ and $N_{xy,crit}$;

- training (3) a set of artificial neural networks, ANNs (3.1, 3.2, 3.3), by using the training dataset;
- executing (4) a greedy algorithm that is fed with the specification and the trained artificial neural networks (3.1, 3.2., 3.3), wherein said greedy algorithm outputs a plurality of optimal laminates;
- generating (5) a database of optimal laminates wherein the optimal laminates outputted in the previous step are stored;

and wherein the method further comprises the following step:

- manufacturing (6) the composite structure according to at least one of the stacking sequence parameters of the optimal laminates of the database;

wherein the set of artificial neural networks (3.1, 3.2, 3.3) comprises:

- a first artificial neural network (3.1) configured to predict pure compression buckling for each combination of compression and shear loads according to the specification;
- a second artificial neural network (3.2) configured to predict pure shear buckling for each combination of compression and shear loads according to the specification;
- a third artificial neural network (3.3) configured to predict combined buckling for each combination of compression and shear loads according to the specification;

wherein the first artificial neural network (3.1) is inputted with the dimensionless bending stiffness parameters $\alpha$, $\beta$, $\gamma$ and $\delta$ and the aspect ratio $b/a$; and the first artificial neural network (3.1) outputs a prediction of $N_{x_{crit}}/N_{x,analytical}$;

wherein the second artificial neural network (3.2) is inputted with the dimensionless bending stiffness parameters $\alpha$, $\beta$, $\gamma$ and $\delta$ and the aspect ratio $b/a$; and the second artificial neural network (3.2) outputs a prediction of $N_{xy_{crit}}/N_{xy,analytical}$;

wherein the third artificial neural network (3.3) is inputted with the dimensionless bending stiffness parameters $\alpha$, $\beta$, $\gamma$ and $\delta$, the aspect ratio $b/a$ and the output of the other two artificial neural networks (3.1, 3.2); and the third artificial neural network (3.3) outputs an estimation of a reserve factor;

wherein executing (4) the greedy algorithm comprises, for each combination of compression and shear loads according to the specification, the following steps:

a) providing (4.1) an initial stacking sequence;
b) providing (4.2) lay-up constraints;
c) checking (4.3) valid combinations of the stacking sequence parameters of the initial stacking sequence which meet the lay-up constraints;
d) evaluating (4.4) a ratio $\Delta RF/\Delta L$ for the initial stacking sequence; where $\Delta RF$ is the difference between a reserve factor of the initial stacking sequence and a reserve factor of an updated stacking sequence; and wherein $\Delta L$ is the difference between the number of plies of the initial stacking sequence and the number of plies of the updated stacking sequence;
e) adding (4.5), at least, a new ply to the initial stacking sequence to obtain the updated stacking sequence;
f) computing a reserve factor of the updated stacking sequence and checking whether said reserve factor is larger than a RF threshold value, $RF_{threshold}$, or not;
g) if the reserve factor is larger than $RF_{threshold}$, the updated stacking sequence is an optimal laminate and is stored in the database; otherwise, the initial stacking sequence is replaced with the updated stacking sequence;
h) repeating the previous steps a)-g) while the reserve factor of an updated stacking sequence is lower than $RF_{threshold}$.

**2.** Method according to claim 1, wherein manufacturing (6) comprises automated fiber placement and/or automated tape laying.

**3.** Method according to any of the preceding claims, wherein checking (4.3) valid combinations of the stacking sequence parameters in turn comprises to check one or more of the following conditions:

- the stacking sequence is symmetric and balanced;
- the number of consecutive plies oriented at a same direction in the stacking is limited to a maximum, which is set in the range 3 to 4;
- at least 10 to 15 % of the plies of the stacking are oriented at a same direction;
- plies oriented at $\pm45°$ are kept together in the stacking sequence;
- the number of plies of the stacking is limited to the range 8-30; and

wherein the stacking sequence parameters that does not meet one or more of the above conditions are discarded.

4. Method according to the preceding claim, wherein in checking (4.3) valid combinations of the stacking sequence parameters, only directions at 0°, $\pm45°$ and 90° are considered.

5. Method according to any of the preceding claims, wherein the training dataset only comprises laminates with plies oriented at 0°, $\pm45°$ and 90°.

6. Method according to any of the preceding claims, wherein the training dataset comprises laminates with at least five different loading states, more preferably at least a pure compression load and a pure shear load.

7. Method according to any of the preceding claims, wherein the composite structure material set in the specification is: epoxy, carbon-fiber-reinforced polymers and/or glass-fibre-reinforced plastic.

8. Method according to any of the preceding claims, wherein each of the first and the second artificial neural networks (3.1, 3.2) comprise:

   - an input layer with 5 to 10 neurons;
   - three hidden layers, with 50 to 90, 20 to 40 and 10 to 30 neurons, respectively.
   - an output layer, with 1 neuron;

   and wherein the third artificial network (3.3) comprises:

   - an input layer with one neuron more than the input layer of the first and the second artificial neural networks (3.1, 3.2),
   - three hidden layers, with 50 to 90, 20 to 40 and 10 to 30 neurons, respectively.
   - an output layer, with 1 neuron.

9. Method according to any of the preceding claims, wherein each of the first and the second artificial neural networks (3.1, 3.2) comprise:

   - an input layer with 5 neurons;
   - three hidden layers, with 70, 30 and 20 neurons, respectively.
   - an output layer, with 1 neuron;

   and wherein the third artificial network (3.3) comprises:

   - an input layer with 6 neurons.
   - three hidden layers, with 70, 30 and 20 neurons, respectively.
   - an output layer, with 1 neuron.

10. Method according to any of the preceding claims 8-9, wherein:

    - a sigmoid activation function is configured for at least some of the neurons of at least one of the artificial neural networks (3.1, 3.2, 3.3); and/or
    - a mean squared error is configured as a loss function in at least one of the artificial neural networks (3.1, 3.2, 3.3).

11. Method according to any of the preceding claims, wherein one or more of the following input parameters are established in the specification:

    - Young's modulus in the longitudinal direction, E1, is set in the range 130 to 160 GPa.

- Young's modulus in the transverse direction, E2, is set in the range 7.5 to 9.5 GPa.
- Shear modulus, $G_{12}$, is set in the range 3.6 and 4.6 GPa.
- Poisson coefficient, $\mu_{12}$, is set in the range 0.3-0.4.

12. Method according to any of the preceding claims, wherein the RF threshold value, $RF_{threshold}$, is in the range 1 to 1.05.

13. A computer program product comprising instructions which, when the program is executed by a computer, cause the computer to carry out the following steps of the method according to any of claims 1 to 12: providing (1) the specification, providing (2) a training dataset, training (3) a set of artificial neural networks, executing (4) a greedy algorithm, and generating (5) a database of optimal laminates.

14. A computer-readable storage medium comprising instructions which, when executed by a computer, cause the computer to carry out the following steps of the method according to any of claims 1 to 12: providing (1) the specification, providing (2) a training dataset, training (3) a set of artificial neural networks, executing (4) a greedy algorithm, and generating (5) a database of optimal laminates.

15. Aircraft (12) comprising a composite structure (13, 14, 15) manufactured according to the method of any of claims 1 to 12.

FIG.1

FIG.2

FIG.3

FIG.4

FIG.6

**FIG.5**

**FIG.7**

**EUROPEAN SEARCH REPORT**

Application Number

EP 23 38 2635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/170022 A1 (MALIK MUHAMMAD HARIS [SA] ET AL) 18 June 2015 (2015-06-18) * abstract * * paragraph [0177] * * paragraph [0367] * * paragraphs [0457] - [0459] * * paragraphs [0465] - [0469] * * paragraphs [0488] - [0491] * * paragraphs [0497] - [0500] * ----- | 1-13 | INV. G06F30/17 G06F30/23 G06F30/27 ADD. G06F113/24 G06F113/26 G06F119/14 G06F119/18 |
| A | CN 114 239 157 A (CO LTD) 25 March 2022 (2022-03-25) * abstract * * paragraph [n0006] * * paragraph [n0007] * * paragraph [n0008] * * paragraph [n0009] * * paragraph [n0010] * * paragraph [n0011] * * paragraph [n0012] * * paragraph [n0013] * * paragraph [n0014] * * paragraph [n0015] * * paragraph [n0016] * * paragraph [n0017] * * paragraph [n0018] * * paragraph [n0019] * * paragraph [n0020] * * paragraph [n0021] * * paragraph [n0022] * * paragraph [n0023] * ----- | 1-15 | |

TECHNICAL FIELDS SEARCHED (IPC)

G06F

-/--

The present search report has been drawn up for all claims

| Place of search | Date of completion of the search | Examiner |
|---|---|---|
| Munich | 4 December 2023 | Sohrt, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches Patentamt

European Patent Office

Office européen des brevets

## EUROPEAN SEARCH REPORT

Application Number

EP 23 38 2635

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 611 389 A (UNIV BEIHANG) 10 June 2022 (2022-06-10) * abstract * * paragraph [0023] * * paragraph [n0008] * * paragraph [n0009] * * paragraph [n0010] * * paragraph [n0011] * * paragraph [n0012] * * paragraph [n0013] * * paragraph [n0014] * * paragraph [n0015] * * paragraph [n0016] * * paragraph [n0017] * * paragraph [n0018] * * paragraph [n0019] * * paragraph [n0027] * * paragraph [n0034] * * paragraph [n0035] * * paragraph [n0052] * * paragraph [n0054] * * paragraph [n0060] * * claims 1-2 * ----- | 1-15 | |

**TECHNICAL FIELDS SEARCHED      (IPC)**

The present search report has been drawn up for all claims

| Place of search | Date of completion of the search | Examiner |
|---|---|---|
| Munich | 4 December 2023 | Sohrt, Wolfgang |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

&: member of the same patent family, corresponding
  document

EPO FORM 1503 03.82 (P04C01)

# EP 4 481 614 A1

## ANNEX TO THE EUROPEAN SEARCH REPORT
## ON EUROPEAN PATENT APPLICATION NO.

EP 23 38 2635

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2023

| Patent document cited in search report | Publication date | Patent family member(s) | Publication date |
|---|---|---|---|
| US 2015170022 A1 | 18-06-2015 | NONE | |
| CN 114239157 A | 25-03-2022 | NONE | |
| CN 114611389 A | 10-06-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NETTLES, A. T.** *Basic mechanics of laminated composite plates*, 1994
- **MICHAEL P. NEMETH**. Buckling behaviour of long symmetrically laminated plates subjected to combined loadings. *NASA Technical Paper 3195*, May 1992
- **A. BRASINGTON et al.** Automated fiber placement: A review of history, current technologies, and future paths forward. *Composites Part C: Open Access*, 2021, vol. 6, 100182
- **B. KRISTINSDOTTIR et al.** Optimal design of large composite panels with varying loads. *Composite Structures*, 2001, vol. 51 (1), 93-102
- **S. B. BATDORF** ; **MANUEL STEIN**. Critical combinations of shear and direct stress for simply supported rectangular flat plates. *National Advisory Committee for Aeronautics, Technical Note 1223*, 1947